# DEMANDE DE BREVET EUROPEEN

(11) **EP 1 385 132 A1**
(43) Date de publication de la demande: **28.01.2004**
(21) Numéro de dépôt: 03356113.5
(22) Date de dépôt: 24.07.2003
(51) Int. Cl.: G07F 19/00

(54) **Procédé et dispositif pour automatiser les transactions**

(30) Priorité: 24.07.2002 FR 0209464
(71) Demandeur: SAGEM MONETEL, 75015 Paris (FR); G & A, 26100 Romans sur Isère (FR)
(72) Inventeur: Baudoin, Michel, F-74800 La Roche sur Foron (FR); Gervais, Jean-Pierre, F-26100 Romans sur Isere (FR); de Lacretelle, Didier, F-26750 Saint Paul les Romans (FR)
(74) Mandataire: Poncet, Jean-François

(57) **Abrégé**

Selon l'invention, on automatise les transactions entre un client équipé d'un terminal client (1), un prestataire de services équipé d'un terminal prestataire (2), et un centre gestionnaire équipé d'un serveur gestionnaire (4), par communication sur le réseau téléphonique public. Un serveur central (3) gère les transmissions entre le terminal prestataire (2) et le terminal client (1). Les transactions sont partagées en au moins une première étape de transaction (23) par une première liaison téléphonique (22), et au moins une seconde étape de transaction (25) par communication directe entre le terminal client (1) et le serveur gestionnaire (4) par une seconde liaison téléphonique (24). Les basculements entre liaisons téléphoniques successives sont réalisés de façon automatique, sans rupture, de façon à être transparents pour le client.

## Description

La présente invention concerne les moyens permettant d'automatiser et de simplifier les transactions, notamment les transactions réparties dans lesquelles plusieurs acteurs doivent intervenir successivement en échangeant des informations et des instructions.

On a déjà développé sur le réseau mondial de communication entre ordinateurs (Internet) des applications permettant de réaliser des transactions réparties dans lesquelles des serveurs spécialisés délivrent ensemble une succession de tâches qui, vues de l'usager, se présentent comme une application unique. Ces applications requièrent en général des terminaux de type ordinateur personnel, supportant les piles de protocoles IP.

Mais pour la plupart des usagers, le réseau Internet n'offre pas toutes les garanties de sécurité, notamment pour ce qui entoure les transactions financières.

L'un des problèmes des transactions commerciales par carte bancaire ou autre moyen équivalent réside dans la possibilité qu'ont les fraudeurs de réaliser des transactions illicites, non désirées par le titulaire de la carte, dès lors qu'ils connaissent le numéro complet de la carte et sa date de fin de validité.

En effet, de nombreuses transactions sont actuellement autorisées par la simple connaissance d'un numéro de carte, et la transaction peut alors se faire à l'insu du titulaire de la carte.

On comprend que la difficulté vient du fait que le client titulaire de la carte doit communiquer son numéro de carte au prestataire, pour que le paiement puisse avoir lieu et que le produit ou le service lui soit délivré.

Il y a un besoin de protéger le prestataire contre toute révocabilité de la transaction après délivrance de la prestation.

Il y a également un besoin de protéger le client ou titulaire de la carte contre toute utilisation frauduleuse de son numéro de carte bancaire.

Il y a un besoin de protéger la banque contre toute fausse transaction avec fausse carte bancaire dont le numéro ne fait pas l'objet d'un refus.

Il y a également un besoin de protéger les informations transmises sur la vie privée, informations susceptibles d'être contenues dans la carte à mémoire du client.

L'idée qui est à la base de l'invention est de réaliser les transactions réparties par communications téléphoniques entre terminaux téléphoniques et serveurs. Mais cela nécessite l'établissement successif de nombreuses liaisons téléphoniques, ce qui peut être fastidieux et malaisé.

Un problème proposé par l'invention est de concevoir de nouveaux moyens permettant d'automatiser et de faciliter les transactions par liaisons téléphoniques en assurant l'établissement automatique de tout ou partie des liaisons téléphoniques successives nécessaires à la transaction.

Il faut en effet éviter que l'utilisateur soit obligé d'effectuer lui-même des opérations trop nombreuses d'établissement de liaisons téléphoniques avec les interlocuteurs successifs, notamment par la composition de numéros téléphoniques appropriés, car cela freine les transactions et peut rebuter l'utilisateur.

L'invention vise ainsi à concevoir de nouveaux moyens permettant de libérer l'utilisateur des contraintes d'établissement de liaisons téléphoniques avec des interlocuteurs successifs intervenant au cours des transactions complexes.

Un autre but de l'invention est de réduire les flux de communication dans les serveurs aux strictes contrôles nécessaires afin de permettre de desservir un parc important d'usagers avec un nombre limité de serveurs d'application.

Dans le cas de transactions sensibles telles que les transactions commerciales par cartes bancaires, l'invention vise en outre à améliorer la sécurité. L'idée de l'invention est alors de diviser chaque transaction à sécuriser en plusieurs étapes, de faire en sorte que le client s'adresse à des interlocuteurs différents à chaque étape, de façon que chaque interlocuteur ne connaisse pas la totalité des informations nécessaires pour la transaction globale. On évite ainsi qu'un interlocuteur, connaissant l'ensemble des informations, puisse ultérieurement en effectuer une utilisation frauduleuse.

Pour atteindre ces buts ainsi que d'autres, l'invention propose un dispositif pour automatiser les transactions entre un client et plusieurs acteurs, comprenant au moins un terminal client et deux terminaux ou serveurs dédiés chacun à l'un des acteurs et connectés sur un réseau téléphonique public, le terminal client comportant :
- des moyens pour communiquer par une liaison téléphonique d'un réseau téléphonique,
- une unité de calcul locale et des mémoires associées contenant un programme client adapté,
- des moyens d'interface d'entrée, accessibles par l'unité de calcul locale, et permettant au client d'entrer des codes et des messages à transmettre,
- des moyens d'interface de sortie, accessibles par l'unité de calcul locale et permettant au client de percevoir les messages reçus,
- dans le programme client, au moins une séquence d'instruction de basculement pour réaliser, de façon transparente pour le client, l'interruption ou la mise en attente d'une liaison téléphonique précédente établie entre le terminal client et un premier serveur ou terminal dédié à un premier acteur, et la reprise ou l'établissement d'une liaison téléphonique suivante entre le terminal client et un second serveur ou terminal dédié à un second acteur.

Selon un premier mode de réalisation, le programme client comprend au moins une séquence de basculement selon laquelle :
a) le terminal client reçoit du premier serveur ou terminal dédié au premier acteur un message comportant le numéro d'appel du second serveur ou terminal dédié au second acteur, avec l'instruction d'appeler le second serveur ou terminal,
b) le terminal client utilise ledit numéro d'appel pour établir une liaison téléphonique suivante avec le second serveur ou terminal.

Selon un second mode de réalisation, le programme client comprend au moins une séquence de basculement selon laquelle :
a) le terminal client reçoit du premier serveur ou terminal dédié au premier acteur un message contenant l'instruction d'attendre l'appel du second serveur ou terminal dédié au second acteur,
b) le terminal client reçoit l'appel du second serveur ou terminal.

Dans l'un et l'autre des cas, on peut prévoir que, après établissement complet de la communication avec le second serveur ou terminal, le terminal client ou le premier serveur ou terminal interrompt la liaison téléphonique précédente pour libérer la liaison avec le premier serveur ou terminal.

De préférence, le réseau téléphonique offre la fonction double appel ; lors de la séquence de basculement, la liaison téléphonique précédente est conservée, et la liaison téléphonique suivante est établie comme second appel ; les commutations pour établissement complet de la seconde liaison téléphonique et éventuellement, entre étapes de transaction s'effectuent ensuite en utilisant la fonction double appel du réseau téléphonique.

De façon encore préférée, le réseau téléphonique offre la fonction d'identification de l'appelant ; avant établissement de la liaison téléphonique suivante, le terminal client utilise alors la fonction d'identification de l'appelant pour contrôler si un appel entrant provient du second terminal ou serveur, et pour s'abstenir de prendre toute communication provenant d'un tiers. On évite ainsi toute rupture apparente dans le déroulement de la prestation, ce qui est essentiel pour garantir la transparence.

Selon un autre aspect, l'invention propose un dispositif d'automatisation des transactions entre un prestataire et un client tel que défini ci-dessus, comprenant en outre :
a) un serveur central comportant :
   - une unité de calcul centrale et des mémoires associées contenant un programme central adapté,
   - des moyens pour communiquer par au moins une liaison téléphonique du réseau téléphonique,
b) un terminal prestataire, dédié au premier acteur, et comportant :
   - une unité de calcul prestataire, et des mémoires associées contenant un programme prestataire adapté,
   - des moyens pour communiquer par une liaison téléphonique du réseau téléphonique,
   - des moyens d'interface d'entrée, accessibles par l'unité de calcul prestataire, et permettant au prestataire d'entrer des codes et des messages à transmettre,
   - des moyens d'interface de sortie, accessibles par l'unité de calcul prestataire, et permettant au prestataire de percevoir les messages reçus,
c) un serveur gestionnaire, dédié au second acteur, et comportant :
   - une unité de calcul gestionnaire, et des mémoires associées contenant un programme gestionnaire approprié,
   - des moyens pour communiquer par une liaison téléphonique du réseau téléphonique,
d) un réseau téléphonique incluant lesdites liaisons téléphoniques.

Le programme du terminal client, le programme du serveur central, le programme du terminal prestataire et le programme du serveur gestionnaire peuvent avantageusement comprendre des séquences d'instructions pour commander le déroulement d'au moins une transaction partagée ayant notamment la succession des étapes :
i) lorsque le terminal prestataire reçoit du prestataire le numéro de téléphone du client et les informations relatives à la transaction envisagée, il envoie ces données au serveur central via le réseau téléphonique,
ii) le serveur central mémorise lesdites données reçues du terminal prestataire, puis génère et envoie un message d'appel pour transaction au terminal client via le réseau téléphonique en utilisant le numéro de téléphone contenu dans lesdites données reçues du terminal prestataire,
iii) le terminal client reçoit le message d'appel pour transaction du serveur central et génère un signal de requête destiné au client,
iv) lorsque le terminal client reçoit du client un ordre d'accord, il établit une première liaison téléphonique avec le serveur central via le réseau téléphonique,
v) le serveur central gère alors une première étape de transaction entre le serveur central et le terminal client,
vi) le serveur central provoque l'établissement d'une seconde liaison téléphonique simultanée entre le terminal client et le serveur gestionnaire, avec mise en attente éventuelle de la première liaison téléphonique,
vii) le terminal client et le serveur gestionnaire communiquent directement au cours d'une seconde étape de transaction.

Selon un mode de réalisation adapté à la sécurisation des transactions, à l'issue de la seconde étape de transaction, le serveur gestionnaire émet un message de validation sécurisé que le terminal client reçoit et transmet au terminal prestataire par le serveur central.

Dans la procédure de basculement vers le serveur gestionnaire et éventuellement la poursuite du déroulement de la transaction, le terminal client utilise la fonction double appel pour communiquer tantôt avec le serveur gestionnaire, tantôt avec le serveur central.

Les opérations que le client doit effectuer sont ainsi limitées au strict minimum, et sont particulièrement simples et rapides.

Selon un autre aspect, l'invention prévoit un procédé pour automatiser les transactions entre un client et plusieurs acteurs, utilisant un dispositif ci-dessus, dans lequel les basculements successifs de liaison téléphonique entre le terminal client et les terminaux ou serveurs dédiés successifs sont réalisés automatiquement et de manière transparente pour le client par le terminal client.

De préférence, le basculement s'effectue en utilisant la fonction double appel et/ou la fonction d'identification de l'appelant, de manière à conserver en attente la liaison téléphonique établie initialement avec le serveur central et à permettre l'établissement sans délai de la liaison téléphonique suivante.

Dans le but de sécuriser les transactions, les transactions à sécuriser sont chacune partagées en au moins une première étape de transaction par échange d'informations et/ou d'instructions entre le terminal client et le terminal prestataire par l'intermédiaire du serveur central, et au moins une seconde étape de transaction s'effectuant par échange d'informations et/ou d'instructions directement entre le terminal client et le serveur gestionnaire, de sorte que ni le terminal prestataire ni le serveur central n'ont une connaissance complète des informations de contrôle échangées au cours de la transaction à sécuriser.

D'autres objets, caractéristiques et avantages de la présente invention ressortiront de la description suivante de modes de réalisation particuliers, faite en relation avec les figures jointes, parmi lesquelles:
- la figure 1 illustre l'architecture générale d'un dispositif permettant des transactions réparties selon l'invention, dans lequel un terminal client est raccordé par le réseau téléphonique public à différents serveurs susceptibles d'intervenir successivement au cours d'une même transaction avec ce terminal client ;
- la figure 2 illustre un mode de réalisation de dispositif d'automatisation de transaction selon l'invention, avec les flux d'informations et de données ;
- la figure 3 illustre l'architecture d'un terminal tel que le terminal client, le terminal prestataire ou éventuellement un terminal de centre gestionnaire ;
- la figure 4 illustre un exemple d'organigramme du logiciel implémenté dans le dispositif de l'invention pour gérer l'établissement des liaisons téléphoniques et le basculement entre les étapes successives, avec le minimum d'intervention du client ; dans cet exemple, la seconde étape de la transaction, y compris l'établissement de la liaison téléphonique qui la précède, sont initialisés par le serveur dédié à cette seconde étape sur requête du serveur dédié à la première étape ;
- la figure 5 est un diagramme modifié du logiciel, dans un mode de réalisation dans lequel le terminal client établit lui-même la liaison téléphonique avec le serveur immédiatement dédié à la nouvelle étape ; et
- la figure 6 illustre une variante du diagramme de la figure 4 dans laquelle le serveur immédiatement dédié à la nouvelle étape établit la seconde liaison après déconnexion du terminal client. Cette option est négociée préalablement entre le serveur central et le serveur gestionnaire.

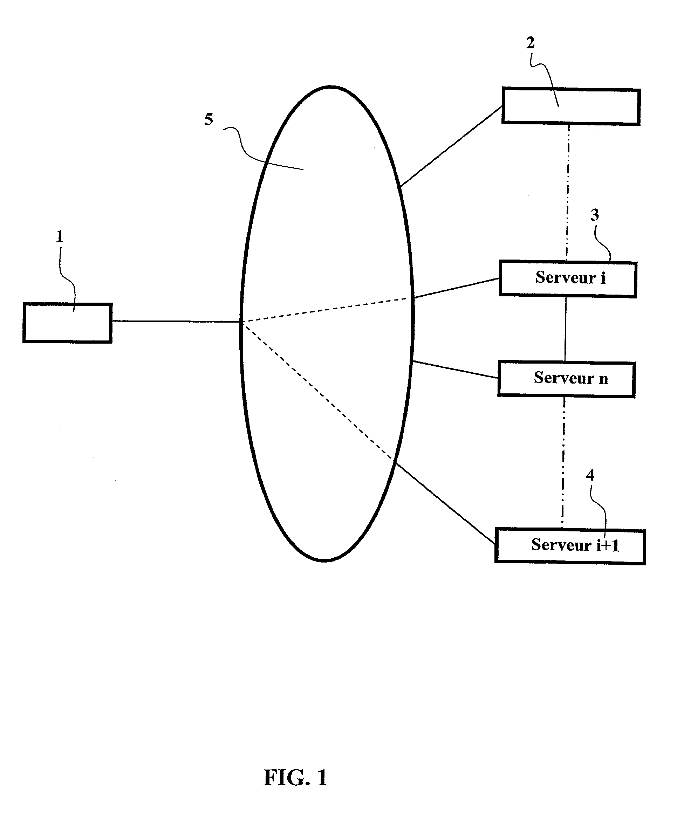

Dans le mode de réalisation illustré sur la figure 1, un dispositif d'automatisation des transactions selon l'invention comprend un terminal client 1, un serveur central 3, au moins un terminal prestataire 2, au moins un serveur gestionnaire 4, et un réseau téléphonique 5 raccordé à tous les éléments ci-dessus.

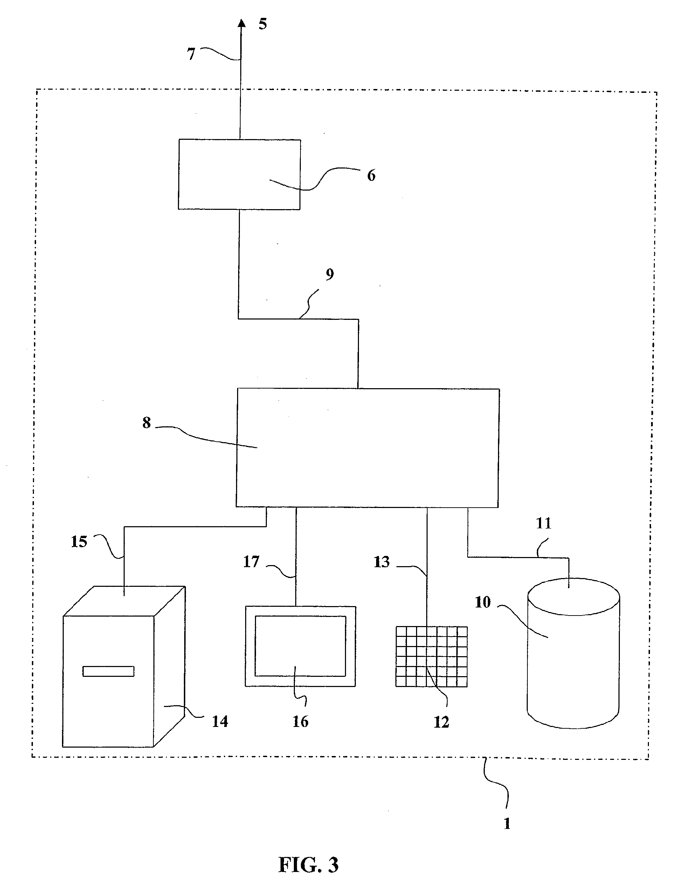

En se référant à la figure 3, un terminal client 1 comprend des moyens pour communiquer par liaison téléphonique, par exemple un modem 6 connecté à une ligne téléphonique 7 du réseau téléphonique 5.

Le terminal client 1 comprend une unité de calcul locale 8, connectée au modem 6 par une ligne 9, et connectée à des mémoires associées 10 par une ligne 11. Les mémoires associées 10 contiennent un programme client adapté, mis en oeuvre par l'unité de calcul locale 8 pour remplir les fonctions du terminal client 1.

Le terminal client 1 comprend des moyens d'interface d'entrée, accessibles par l'unité de calcul locale 8, et permettant au client d'entrer des codes et des messages à transmettre sur la ligne téléphonique 7. Dans la réalisation illustrée sur la figure 3, les moyens d'interface d'entrée comprennent un clavier 12 connecté à l'unité de calcul locale 8 par une ligne 13, et un lecteur de carte à mémoire 14 connecté à l'unité de calcul locale 8 par une ligne 15.

En outre, le terminal client 1 comprend des moyens d'interface de sortie, accessibles par l'unité de calcul locale 8, et permettant au client de percevoir les messages reçus. Dans la réalisation illustrée sur la figure 3, les moyens d'interface de sortie comprennent un écran d'affichage 16 connecté à l'unité de calcul locale 8 par une ligne 17. On peut également envisager des moyens d'interface de sortie comprenant un générateur de signal audible, un générateur de signal lumineux, ou tout autre générateur de signal perceptible par le client.

Le terminal prestataire 2 peut avoir une structure similaire de celle illustrée sur la figure 3 pour le terminal client 1, avec une unité de calcul prestataire, des mémoires associées contenant un programme prestataire adapté, des moyens de modem pour communiquer avec la ligne téléphonique, des moyens d'interface d'entrée tels qu'un clavier et éventuellement un lecteur de carte à mémoire, accessibles par l'unité de calcul prestataire et permettant au prestataire d'entrer des codes et des messages à transmettre, et des moyens d'interface de sortie accessibles par l'unité de calcul prestataire et permettant au prestataire de percevoir les messages reçus par la ligne téléphonique.

Le serveur central 3 et le serveur gestionnaire 4 peuvent comporter une unité de calcul centrale et des mémoires associées contenant des programmes adaptés, avec des moyens tels qu'un modem pour communiquer par au moins une ligne téléphonique du réseau téléphonique 5.

Les programmes contenus dans les mémoires associées respectives du terminal client 1, du terminal prestataire 2, du serveur central 3 et du serveur gestionnaire 4 comprennent des séquences d'instruction pour commander le déroulement d'au moins une transaction selon une succession d'étapes assurant l'automatisation et la transparence de la transaction.

On décrira maintenant des exemples de successions d'étapes permettant d'assurer cette automatisation et cette transparence.

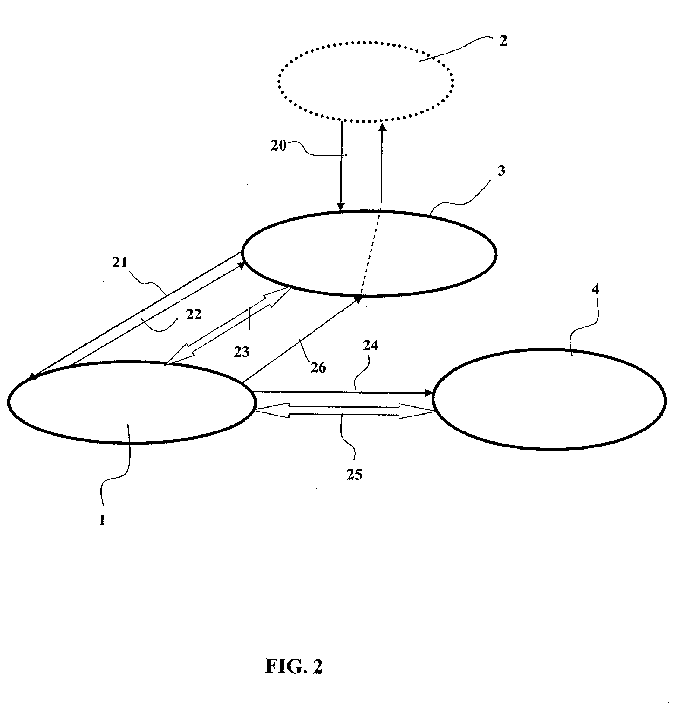

La figure 2 illustre un exemple d'application de l'invention dans le cas d'une transaction comportant le recouvrement du paiement d'un client au moyen d'une télétransaction par carte bancaire pour le compte d'un prestataire qui au préalable a accepté ce mode de paiement.

La transaction implique l'intervention du terminal client 1, d'un terminal prestataire 2, d'un serveur central 3, et d'un serveur gestionnaire 4. La figure représente les échanges d'informations et d'instructions sur le réseau téléphonique public.

Pour recouvrir le paiement du client par télétransaction par carte bancaire, le terminal prestataire 2 émet vers le serveur central 3 une demande de paiement, par une première communication téléphonique 20 sur le réseau téléphonique public. Le serveur central 3 adresse alors au terminal client 1, par une seconde communication téléphonique sur le réseau téléphonique public, un message d'appel pour transaction 21, par exemple un message SMS d'invitation à payer. Le terminal client établit alors une première liaison téléphonique 22 avec le serveur central 3, pour réaliser par l'intermédiaire du serveur central 3 un début de transaction consistant dans un échange de données et d'instructions, au cours d'une première étape d'initialisation de transaction 23.

Sans mettre fin à la première liaison téléphonique 22 entre le terminal client 1 et le serveur central 3, on établit une nouvelle liaison téléphonique 24 entre le terminal client 1 et le serveur gestionnaire 4, pour un échange d'informations et d'instructions directement entre le terminal client 1 et le serveur gestionnaire 4 sans passer par le serveur central 3. On réalise ainsi une seconde étape 25 de transaction. A l'issue de cette étape de contrôle, le serveur gestionnaire 4 envoie au terminal client 1 un message de validation sécurisé tel qu'un certificat de paiement ou de refus de paiement, certificat que le terminal client 1 peut envoyer au terminal prestataire 2 par l'intermédiaire du serveur central 3 (communication 26), pour justifier de son paiement. Le serveur central 3 peut envoyer au terminal prestataire 2 soit le certificat de paiement, soit un message d'accusé de réception de paiement.

On voit donc, dans cet exemple, que les transmissions d'informations et instructions sont réalisées par l'intermédiaire du réseau téléphonique ; le serveur central 3 gère les transmissions entre le terminal prestataire 2 et le terminal client 1 ; la transaction est partagée entre une première étape de transaction 23 qui s'effectue par échange d'informations et/ou d'instructions entre le terminal client 1 et le terminal prestataire 2 par l'intermédiaire du serveur central 3, et au moins une seconde étape de transaction 25 qui s'effectue, par échange d'informations et/ou d'instructions directement entre le terminal client 1 et le serveur gestionnaire 4.

De la sorte, ni le terminal prestataire 2 ni le serveur central 3 n'ont une connaissance complète des informations de contrôle échangées au cours de la transaction, qui se trouve ainsi sécurisée.

On conçoit que l'un des problèmes réside dans l'établissement des liaisons téléphoniques, qui nécessite de connaître le numéro d'appel du destinataire et de composer ce numéro. Le client ne connaît généralement pas tous les numéros, et la composition de numéros nécessairement longs le rebute et doit être évitée.

Pour cela, le terminal client 1 est adapté pour automatiser l'établissement et les basculements de liaisons téléphoniques, et pour les rendre transparentes pour le client.

Une première façon de réduire les opérations de composition de numéro est d'utiliser un réseau téléphonique offrant la fonction double appel pour commuter entre les étapes d'initialisation et les étapes de contrôle. Par exemple, dans l'application de la figure 2, le terminal client 1 peut utiliser la fonction double appel pour revenir vers le serveur central 3 après l'étape de contrôle 25 avec le serveur gestionnaire 4.

Au cours des commutations entre les différentes étapes de la prestation, on peut avantageusement utiliser la fonction d'identification de l'appelant, pour s'assurer que les informations et instructions proviennent bien d'une source fiable. Par exemple, le terminal client 1 peut s'assurer que la liaison téléphonique suivante 24, si elle est établie à l'initiative du serveur gestionnaire 4 provient bien du serveur gestionnaire 4 dont il a le numéro pré-enregistré.

Le second appel 24 peut avantageusement être réalisé par le terminal client 1 ou par le serveur gestionnaire 4, de façon à établir deux liaisons téléphoniques simultanées 22 et 24 avec le terminal client 1. Ensuite, le terminal client 1 n'effectue que des basculements de double appel entre les deux liaisons téléphoniques 22 et 24 pour réaliser les commutations entre les étapes de la transaction, par exemple entre l'étape d'initialisation de transaction 23 et l'étape de contrôle 25.

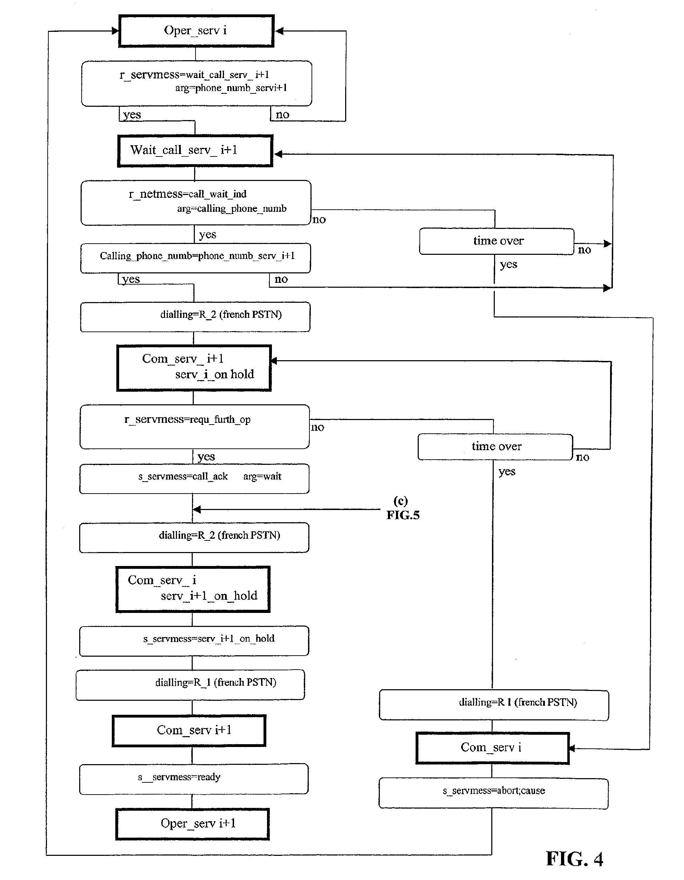

Les figures 4 à 6 décrivent plus particulièrement les diagrammes de commutation opérant sur un terminal raccordé sur le réseau téléphonique fixe.

A titre d'exemple, on décrira maintenant la procédure d'établissement de la liaison téléphonique suivante 24 entre le terminal client 1 et le serveur gestionnaire 4 à l'initiative et par action du serveur gestionnaire 4 sans intervention du terminal client 1. Cette procédure est illustrée par le diagramme de la figure 4. La procédure s'effectue entre le serveur central 3, que l'on peut désigner par serveur i, et le serveur gestionnaire 4 que l'on peut désigner par serveur i+1.

Le serveur i demande au terminal client 1 d'attendre l'appel du serveur i+1.

Le serveur i informe le serveur i+1 d'appeler le terminal client 1 et lui donne pour cela le numéro d'appel du terminal client 1.

Le serveur i+1 appelle le terminal client 1, et établit ainsi la liaison téléphonique 24.

On notera que la première liaison téléphonique 22, préalablement établie entre le terminal client 1 et le serveur central 3, reste en vigueur pendant l'établissement de la liaison téléphonique suivante 24 ci-dessus.

Le serveur i+1 sollicite la poursuite de la transaction.

Le terminal client 1 peut alors opérer un premier basculement de double appel pour mettre en attente le serveur i+1, pour échanger des informations avec le serveur i et notamment pour l'informer de la suite de procédure avec le serveur i+1, pour libérer ensuite le serveur i et reprendre la liaison téléphonique suivante 24 avec le serveur i+1 par un basculement de double appel.

On notera que, par cette procédure, les seules opérations à effectuer par le terminal client 1 sont des opérations de basculement de double appel.

En cas de difficulté pour poursuivre avec le serveur i+1, le terminal client 1 informe le serveur i.

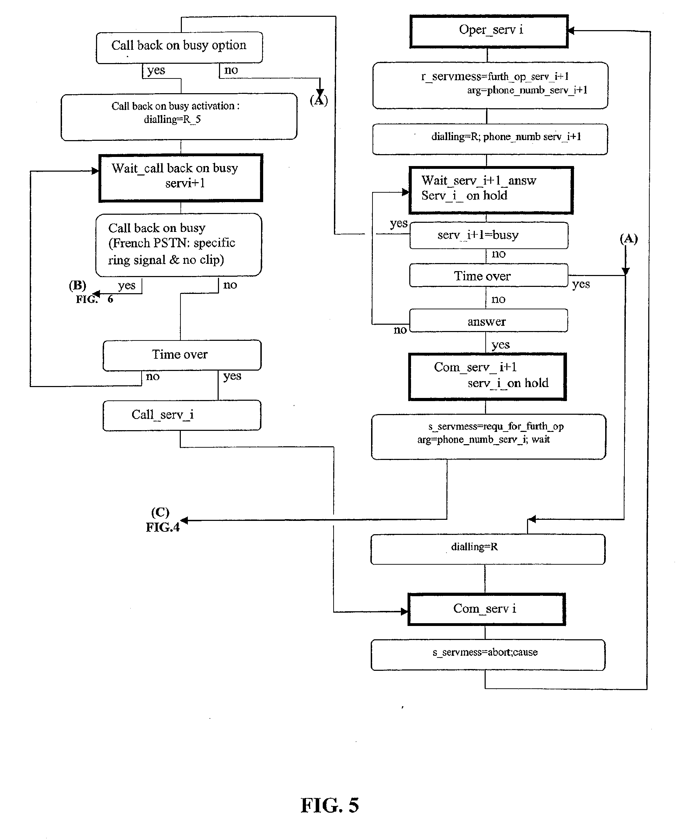

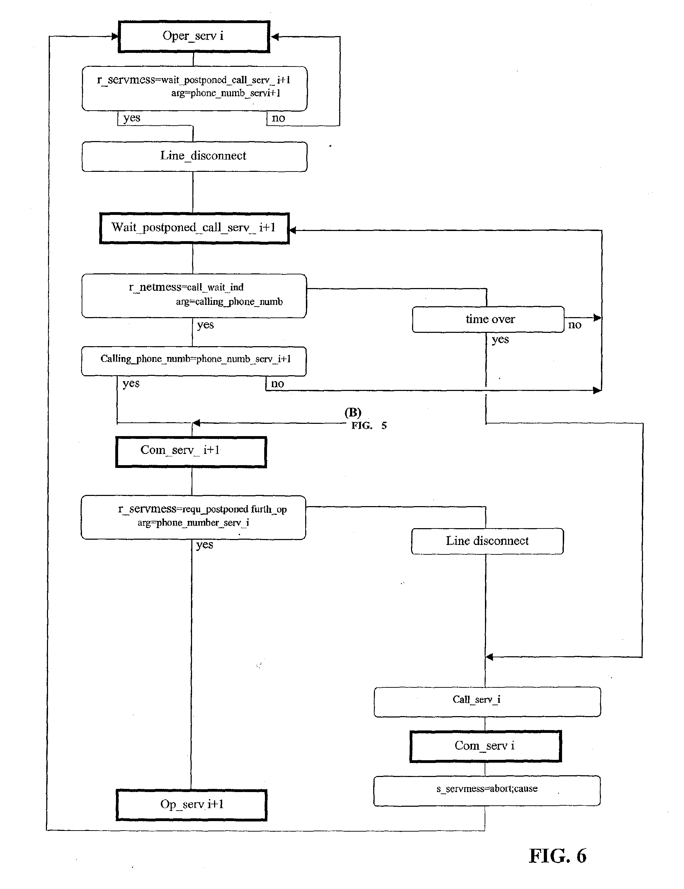

On décrira maintenant une procédure légèrement différente, illustrée sur le diagramme de la figure 5, dans laquelle le serveur i demande au terminal client 1 de poursuivre la transaction avec le serveur i+1 en appelant directement le serveur i+1.

A cet effet, le serveur i communique au terminal client 1 le numéro d'appel du serveur i+1.

De façon automatique et transparente pour le client, le terminal client 1 met le serveur i en attente, et établit la liaison téléphonique suivante 24 avec le serveur i+1. Il informe alors le serveur i+1 de poursuivre la transaction commencée avec le serveur i, et il effectue un basculement de double appel pour libérer le serveur i et revenir en liaison téléphonique 24 avec le serveur i+1.

En cas d'occupation du serveur i+1, le terminal client 1 peut soit revenir sur le serveur i, soit activer la fonction réseau rappel sur occupation si cette fonction est disponible sur le réseau téléphonique.

On décrira maintenant une procédure intermédiaire, illustrée en relation avec le diagramme de la figure 6.

Le serveur i a préalablement informé le serveur i+1 en lui transmettant le numéro d'appel du terminal client 1. Il a demandé au terminal client 1 de se déconnecter et de se mettre en attente de l'appel du serveur i+1, et à cet effet, il lui a transmis le numéro d'appel du serveur i+1.

Lorsque le serveur i+1 appelle le terminal client 1, le terminal client 1 utilise la fonction d'identification de l'appelant, et contrôle le numéro de l'appelant pour vérifier qu'il s'agit bien du numéro qui lui a été précédemment transmis par le serveur i.

Pour la mise en oeuvre des procédures décrites ci-dessus, l'invention prévoit un dispositif d'automatisation des transactions entre un prestataire et un client, dispositif comprenant au moins :
a) un terminal client 1 comportant :
   - des moyens 6, 9 pour communiquer par une liaison téléphonique au travers d'un réseau téléphonique 5,
   - une unité de calcul locale 8 et des mémoires associées 10 contenant un programme client adapté,
   - des moyens d'interface d'entrée 12, 14 accessibles par l'unité de calcul locale 8, et permettant au client d'entrer des codes et des messages à transmettre,
   - des moyens d'interface de sortie 16, accessibles par l'unité de calcul locale 8 et permettant au client de percevoir les messages reçus,
b) un serveur central 3 comportant :
   - une unité de calcul centrale et des mémoires associées contenant un programme central adapté,
   - des moyens pour communiquer par au moins une liaison téléphonique du réseau téléphonique 5,
c) un terminal prestataire 2 comportant :
   - une unité de calcul prestataire, et des mémoires associées contenant un programme prestataire adapté,
   - des moyens pour communiquer par une liaison téléphonique du réseau téléphonique 5,
   - des moyens d'interface d'entrée, accessibles par l'unité de calcul prestataire, et permettant au prestataire d'entrer des codes et des messages à transmettre,
   - des messages d'interface de sortie, accessibles par l'unité de calcul prestataire, et permettant au prestataire de percevoir les messages reçus,
d) un serveur gestionnaire 4, comportant :
   - une unité de calcul gestionnaire, et des mémoires associées contenant un programme gestionnaire approprié,
   - des moyens pour communiquer par une liaison téléphonique du réseau téléphonique 5,
e) un réseau téléphonique 5, incluant lesdites liaisons téléphoniques, et présentant de préférence la fonction double appel et la fonction présentation du numéro d'appelant.

Les programmes du terminal client 1 du serveur central 3, du terminal prestataire 2 et du serveur gestionnaire 4 comprennent des séquences d'instruction pour commander le déroulement d'au moins une transaction partagée ayant la succession des étapes définies précédemment.

Selon ces étapes :
i) lorsque le terminal prestataire 2 reçoit du prestataire le numéro de téléphone du client et les informations relatives à la transaction envisagée, il envoie ces données au serveur central 3 par le réseau téléphonique 5,
ii) le serveur central 3 mémorise lesdites données reçues du terminal prestataire 2, puis génère et envoie un message d'appel pour transaction 21 au terminal client 1 via le réseau téléphonique 5 en utilisant le numéro de téléphone contenu dans les données reçues du terminal prestataire 2,
iii) le terminal client 1 reçoit le message d'appel pour transaction du serveur central 3 et génère un signal de requête destiné au client,
iv) lorsque le terminal client 1 reçoit du client un ordre d'accord, il établit une première liaison téléphonique 22 avec le serveur central 3, et il génère et transmet un message d'accord au serveur central 3 par le réseau téléphonique 5,
v) le serveur central 3 reçoit le message d'accord et gère une première étape de transaction 23,
vi) le serveur central 3 provoque l'établissement d'une liaison téléphonique suivante 24 entre le terminal client 1 et le serveur gestionnaire 4,
vii) le terminal client 1 et le serveur gestionnaire 4 communiquent directement au cours d'une seconde étape de transaction 25.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour automatiser les transactions entre un client et plusieurs acteurs, comprenant au moins un terminal client (1) et deux terminaux ou serveurs dédiés chacun à l'un des acteurs et connectés sur un réseau téléphonique public (5), le terminal client (1) comportant :
- des moyens (6, 9) pour communiquer par une liaison téléphonique au travers d'un réseau téléphonique (5),
- une unité de calcul locale (8) et des mémoires associées (10) contenant un programme client adapté,
- des moyens d'interface d'entrée (12, 14), accessibles par l'unité de calcul locale (8), et permettant au client d'entrer des codes et des messages à transmettre,
- des moyens d'interface de sortie (16), accessibles par l'unité de calcul locale (8) et permettant au client de percevoir les messages reçus,
- dans le programme client, au moins une séquence d'instruction de basculement pour réaliser, de façon transparente pour le client, l'interruption ou la mise en attente d'une première liaison téléphonique (22) établie entre le terminal client (1) et un premier serveur ou terminal dédié à un premier acteur, et la reprise ou l'établissement d'une seconde liaison téléphonique (24) entre le terminal client (1) et un second serveur ou terminal dédié à un second acteur.

2. Dispositif selon la revendication 1, **caractérisé en ce que** le programme client comprend au moins une séquence de basculement selon laquelle :
a) le terminal client (1) reçoit du premier serveur ou terminal dédié au premier acteur un message comportant le numéro d'appel du second serveur ou terminal dédié au second acteur, avec l'instruction d'appeler le second serveur ou terminal,
b) le terminal client utilise ledit numéro d'appel pour établir une liaison téléphonique avec le second serveur ou terminal.

3. Dispositif selon la revendication 1 **caractérisé en ce que** le programme client comprend au moins une séquence de basculement selon laquelle :
a) le terminal client reçoit du premier serveur ou terminal dédié au premier acteur un message contenant l'instruction d'attendre l'appel du second serveur ou terminal dédié au second acteur,
b) le terminal client reçoit l'appel du second serveur ou terminal.

4. Dispositif selon l'une des revendications 2 ou 3, **caractérisé en ce que** :
- le réseau téléphonique (5) offre la fonction de double appel,
- lors de la séquence de basculement, la liaison téléphonique précédente est conservée, et la liaison téléphonique suivante est établie comme second appel.

5. Dispositif selon l'une quelconque des revendications 2 à 4, **caractérisé en ce que** :
- le réseau téléphonique offre la fonction d'identification de l'appelant,
- avant établissement de la liaison téléphonique suivante, le terminal client utilise la fonction d'identification de l'appelant pour contrôler si un appel entrant provient du second terminal ou serveur, et pour s'abstenir de prendre toute communication provenant d'un tiers.

6. Dispositif selon l'une quelconque des revendications 1 à 5, **caractérisé en ce qu'**il comprend en outre :
a) un serveur central (3) comportant :
- une unité de calcul centrale et des mémoires associées contenant un programme central adapté,
- des moyens pour communiquer par au moins une liaison téléphonique du réseau téléphonique (5),
b) un terminal prestataire (2), dédié au premier acteur, et comportant :
- une unité de calcul prestataire, et des mémoires associées contenant un programme prestataire adapté,
- des moyens pour communiquer par une liaison téléphonique du réseau téléphonique (5),
- des moyens d'interface d'entrée, accessibles par l'unité de calcul prestataire, et permettant au prestataire d'entrer des codes et des messages à transmettre,
- des moyens d'interface de sortie, accessibles par l'unité de calcul prestataire, et permettant au prestataire de percevoir les messages reçus,
c) un serveur gestionnaire (4), dédié au second acteur, et comportant :
- une unité de calcul gestionnaire, et des mémoires associées contenant un programme gestionnaire approprié,
- des moyens pour communiquer par une liaison téléphonique du réseau téléphonique (5),
d) un réseau téléphonique (5) incluant lesdites liaisons téléphoniques.

7. Dispositif selon la revendication 6, **caractérisé en ce que** le programme du terminal client (1), le programme du serveur central (3), le programme du terminal prestataire (2) et le programme du serveur gestionnaire (4) comprennent des séquences d'instructions pour commander le déroulement d'au moins une transaction partagée ayant notamment la succession des étapes :
i) lorsque le terminal prestataire (2) reçoit du prestataire le numéro de téléphone du client et les informations relatives à la transaction envisagée, il envoie ces données au serveur central (3) via le réseau téléphonique (5),
ii) le serveur central (3) mémorise lesdites données reçues du terminal prestataire (2), puis génère et envoie un message d'appel pour transaction (21) au terminal client (1) via le réseau téléphonique (5) en utilisant le numéro de téléphone contenu dans lesdites données reçues du terminal prestataire (2),
iii) le terminal client (1) reçoit le message d'appel pour transaction (21) du serveur central (3) et génère un signal de requête destiné au client,
iv) lorsque le terminal client (1) reçoit du client un ordre d'accord, il établit une première liaison téléphonique (22) avec le serveur central (3) via le réseau téléphonique (5),
v) le serveur central (3) gère alors une première étape de transaction (23) entre le serveur central (3) et le terminal client (1),
vi) le serveur central provoque l'établissement d'une seconde liaison téléphonique (24) simultanée entre le terminal client (1) et le serveur gestionnaire (4),
vii) le terminal client (1) et le serveur gestionnaire (4) communiquent directement au cours d'une seconde étape de transaction (25).

8. Dispositif selon la revendication 7, **caractérisé en ce que**, à l'issue de la seconde étape de transaction (25), le serveur gestionnaire (4) émet un message de validation sécurisé que le terminal client (1) reçoit et transmet (26) au terminal prestataire (2) par le serveur central (3).

9. Dispositif selon l'une des revendications 4 ou 5, **caractérisé en ce que** le terminal client (1) utilise la fonction double appel pour communiquer tantôt avec le serveur gestionnaire (4), tantôt avec le serveur central (3).

10. Procédé pour automatiser les transactions entre un client et plusieurs acteurs, utilisant un dispositif selon l'une quelconque des revendications 1 à 9, dans lequel les basculements successifs de liaison téléphonique entre le terminal client et les terminaux ou serveurs dédiés successifs sont réalisés automatiquement et de manière transparente pour le client par le terminal client (1).

11. Procédé selon la revendication 10, **caractérisé en ce que** le basculement s'effectue en utilisant la fonction double appel et/ou la fonction d'identification de l'appelant, de manière à conserver en attente la liaison téléphonique établie initialement avec le serveur central (3) et à permettre l'établissement sans délai de la liaison téléphonique suivante.

12. Procédé selon l'une des revendications 10 ou 11, **caractérisé en ce que** dans le but de sécuriser les transactions, les transactions à sécuriser sont chacune partagées en au moins une première étape de transaction (23) par échange d'informations et/ou d'instructions entre le terminal client (1) et le terminal prestataire (2) par l'intermédiaire du serveur central (3), et au moins une seconde étape de transaction (25) s'effectuant, par échange d'informations et/ou d'instructions directement entre le terminal client (1) et le serveur gestionnaire (4), de sorte que ni le terminal prestataire (2) ni le serveur central (3) n'ont une connaissance complète des informations de contrôle échangées au cours de la transaction à sécuriser.
